# EUROPEAN PATENT SPECIFICATION

(11) **EP 2 897 058 B1**
(45) Date of publication and mention of the grant of the patent: **20.11.2019**
(21) Application number: 13837586.0
(22) Date of filing: 07.08.2013
(51) Int. Cl.: G06F 16/9032, G06F 3/048

(54) **USER INTEFACE DEVICE, SEARCH METHOD, AND PROGRAM**
BENUTZERSCHNITTSTELLENVORRICHTUNG, SUCHVERFAHREN UND PROGRAMM
DISPOSITIF D'INTERFACE UTILISATEUR, PROCÉDÉ DE RECHERCHE ET PROGRAMME

(30) Priority: 13.09.2012 JP 2012201319
(43) Date of publication of application: 22.07.2015
(73) Proprietor: NTT DOCOMO, INC., Chiyoda-ku Tokyo 100-6150 (JP)
(72) Inventor: ENDOU, Satoshi, Tokyo 100-6150 (JP); MIYAMOTO, Fumie, Tokyo 100-6150 (JP)
(74) Representative: Hoffmann Eitle
(86) International application number: PCT/JP2013/071377
(87) International publication number: WO 2014/041930

(56) References cited:
- JP-A- 2010 039 694
- JP-A- 2010 134 664
- JP-A- 2011 028 534
- JP-A- 2012 014 293
- US-A1- 2011 022 982
- US-A1- 2011 316 796

## Description

### Technical Field

Present invention relates to a user interface (UI).

### Background

According to US 2011/316796 A1, an information search apparatus comprises a touch panel, an extraction module, a storage, an operation module, and a conversion unit.

US 2011/022982 A1 discloses a display processing device including a display element, a grouping mechanism configured to group such that each of a plurality of selectable items belongs to one or more groups based on information which each item has.

There is an increasing demand for an easy to use user interface of an electronic device such as a smartphone, for example. Specifically, there is a demand for a device that can be used without difficulty by elderly people or users who are not good at inputting instructions to the device. In this connection, there are devices developed in which an easy-operation mode is implemented in addition to a normal-operation mode. Patent Document 1 discloses a technology of determining attributes of a user, such as age or gender of a user based on facial characteristics of the user and displaying an operation screen depending on the attributes.

### List of Prior Art

### Patent Document

Patent Document 1: JP2011-059194A

### Summary of the Invention

### Problem to be solved by the Invention

A user who has difficulty in conducting a search using a computer may not be able to determine an appropriate search condition. As a result, the user will not be able to obtain easily the desired information. For example, known search engines have a functionality of performing an AND search and an OR search, which necessitates designating a search operator(s). However, a user with little experience or skill in conducting an online search would not be adept at using search operators and would conduct a search merely by inputting simple keywords to obtain the desired information. The results of a search conducted by using keywords alone would be too broad and imprecise, which would make retrieval of information difficult and time consuming. In view of this, the present invention aims to assist a user in setting an appropriate search condition.

### Means for Solving the Problem

The problem of the invention is solved by the subject matter of the independent claims. Advantageous embodiments are disclosed in the dependent claims.

Embodiments which do not fall within the scope of the claims do not describe part of the present invention.

In an aspect of an example, there is provided a user interface device including: a first display controller that displays a first object corresponding to a first subject and a second object corresponding to a second subject; a detection unit that detects an input instructing a change of an arrangement of the first and second objects; and a second display controller that displays a result of a search relating to the first and second subjects in response to an instruction detected by the detection unit, the result depending on the change of the arrangement.

In a preferable example, the second display controller narrows down the search result when a distance between the first and second objects becomes small in response to an input.

Alternatively, the second display controller expands the search result when a distance between the first and second objects becomes large in response to an input.

In another preferable example, the second display controller changes the displayed results from a result of a search conducted based on a logical sum of the first and second subjects to a result of a search conducted based on a logical product of the first and second subjects when a distance between the first and second objects becomes small in response to an input.

In another preferable example, the second display controller changes displayed results from a result of a search conducted based on a logical product of the first and second subjects to a result of a search conducted based on a logical sum of the first and second subjects when a distance between the first and second objects becomes large in response to an input.

In another preferable example, the second display controller generates a search result depending on a time-dependent relative position between the first and second objects, which changes with time.

In another preferable example, when the time-dependent relative position is caused by a rotational motion of the second object with reference to a position of the first object, the second display controller selectively applies a logical sum and a logical product with regard to the first and second subjects for the search depending on a direction of the rotational motion.

In another preferable example, the result includes at least one content that relates to at least one of the first and second subjects; a relevancy indicative of degrees of relevance with regard to the first and second subjects is assigned to the at least one content; and the second display controller narrows down the at least one content specified by the search result to content to which a higher relevancy is assigned when a distance between the first and second objects becomes small in response to an input.

Alternatively, the second display controller may increase the number of the contents included in the search result when a distance between the first and second objects becomes large in response to an input.

In another preferable example, the second display controller displays an amount of at least one content included in the search result in response to an input, prior to a display of the at least one content.

In another preferable example, the second display controller generates different search results depending on a case where the input instructs dislocation of the second object and stay of the first object, and a case where the input instructs dislocation of the first object and stay of the second object.

In another preferable example, the second display controller changes an appearance of at least one of the first and second objects based on a change of the arrangement.

In another aspect of an example, there is provided a method of searching information including: displaying a first object corresponding to a first subject and a second object corresponding to a second subject; detecting an input instructing a change of an arrangement of the first and second objects; and displaying a result of a search relating to the first and second subjects in response to a detected instruction, the result depending on the change of the arrangement.

In another aspect of an example, there is a program that causes a computer to execute: displaying the first object corresponding to a first subject and a second object corresponding to a second subject; detecting an input instructing a change of an arrangement of the first and second objects; and displaying a result of a search relating to the first and second subjects in response to a detected instruction, the result depending on the change of the arrangement.

### Effects of the Invention

According to the present invention, a search condition can be changed easily.

### Brief Description of the Drawings

FIG. 1 shows a block diagram showing an overall configuration of an information search system.
FIG. 2 is a block diagram showing a hardware configuration of a communication terminal.
FIG. 3 is a block diagram showing a functionality with regard to a search performed by the communication terminal.
FIG. 4 shows an example of a search screen.
FIG. 5 is a flowchart of a search.
FIG. 6 shows screens configured to receive an input of an instruction by the user and make a change in accordance with the input.
FIG. 7 shows an example of contents and relevancies.

### Description of Reference Numerals

10···information search system, 100···communication unit, 110···main controller, 111···detection unit, 112···generation unit, 113···obtaining unit, 114···display controller, 120···storage unit, 130···communication unit, 140 ···touch screen, 141···display, 142···sensor, 200···search server, 300··· network

### [Modes for carrying out the Invention]

### Embodiment

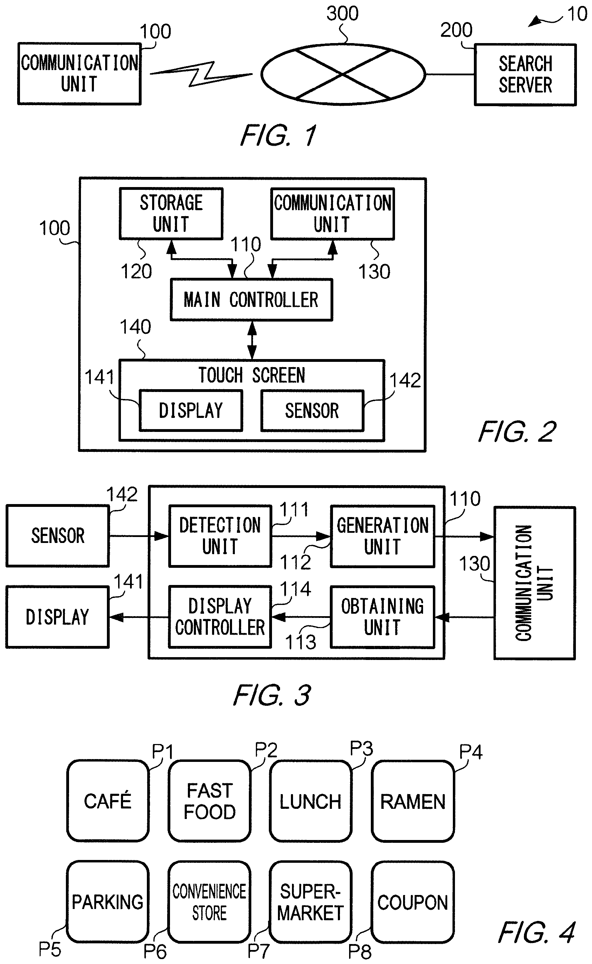

FIG. 1 is a block diagram showing an overall configuration of information search system 10 according to an embodiment of the present invention. Information search system 10 includes a communication terminal 100 and search server 200 which are connected to each other by a network 300 including a mobile communication network and the Internet.

Communication terminal 100 is an electronic device used for a search or other purposes by a user. Assuming that communication terminal 100 is a mobile communication unit, for example, a smartphone, a tablet computer etc., which is configured to receive an input made via a touch screen. The touch screen inputs are described later. Search server 200 conducts a search for a content upon receipt of a query made by communication terminal 100 and transmits a result of the search to communication terminal 100. In the present embodiment, the content is a web page. Stated otherwise, search server 200 generates a search result which includes a list of URLs (UNIFOORM RESOURCE LOCATORS) of web pages satisfying a search condition, and transmits the generated list to communication terminal 100.

FIG. 2 is a block diagram showing a hardware configuration of communication terminal 100. Communication terminal 100 includes a main controller 110, storage unit 120, communication unit 130, and touch screen 140. Communication terminal 100 may include an input device having buttons or keys instead of touch screen 140, the input device including a microphone, a speaker, or the like, which are not shown in FIG. 2.

Main controller 110 is configured to control all of the units included in communication terminal 100. Main controller 110 includes a CPU (CENTRAL PROCESSING UNIT) or other processors and a memory and controls all of the units by executing a predetermined program(s). A functionality of a user interface device according to the present invention is realized by main controller 110 performing a function based on an input made by the user via touch screen 140.

Storage unit 120 stores data. For example, storage unit 120 includes a storage medium having a hard drive and a flash memory to store data used by main controller 110 for controlling communication terminal 100. More specifically, the data stored in storage unit 120 includes a program(s) executed by main controller 110, and image data by which an image is displayed on touch screen 140. Communication unit 130 is configured to transmit and receive data via network 300. Communication unit 130 includes an antenna and a modem in conformity with a communication protocol of network 300, to perform a processing necessary for data communication, which includes modulation and demodulation of the data.

Touch screen 140 is configured to display an image and receive an input made by a user. More specifically, touch screen 140 includes a display 141 and sensor 142. Display 141 includes a screen with a liquid crystal element, an organic EL (ELECTROLUMINESCENCE) element, and a drive circuit to drive the elements, so as to display an image based on image data. Sensor 142 includes a sensor covering a screen of display 141 to output coordinates corresponding to a user's input to main controller 110. In the present embodiment, the user's input refers to an action of touching a point on the screen by his/her finger(s). The coordinates are described by a Cartesian coordinate plane in which an origin of the coordinate axes is set at a predetermined position on the screen.

FIG. 3 is a block diagram showing a functional configuration of communication terminal 100 relating to a search. The functionalities of detection unit 111, generation unit 112, obtaining unit 113, and display controller 114 are implemented by executing a predetermined program(s) by main controller 110 of communication terminal 100. A user interface device of the present invention has the functionalities described above.

Detection unit 111 is configured to detect a user's input. Detection unit 111, based on coordinates supplied by sensor 142 and an image displayed on the screen at the time of the detection, interprets what type of inputs the user made. For example, detection unit 111 is configured to detect a tapping action in which a point on the screen is touched momentarily and a double tapping in which the tapping is input two times in quick succession or other motions made by the user. Additionally, detection unit 111 is configured to detect a length of time the user continues an input action; for example, a long pressing action is detected when the user continues to touch a point on a touch screen for more than a predetermined length of time.

Also, detection unit 111 is configured to detect an input made by a pinching action. The pinching action is made by two fingers touching two points on a screen and moving at least one of the two points on the screen that a user is touching to zoom in and zoom out. Specifically, the pinching action includes a pinching-in to reduce the distance between the two points and a pinching-out to increase the distance.

Generation unit 112 is configured to perform a processing based on an input detected by detection unit 111. In the present embodiment, a primary functionality of generation unit 112 is a generation of a query. The query is a text string indicative of a request for a search based on a search condition the request being sent to search server 200. The text string includes at least a keyword of the subject for the search. Generation unit 112 generates a query corresponding to the input detected by detection unit 111. The query generated by generation unit 112 is transmitted to search server 200 by communication unit 130.

Obtaining unit 113 is configured to obtain data. For example, when communication terminal 100 transmits a query, obtaining unit 113 obtains a data list of the search result from search server 200 via communication unit 130. Also, obtaining unit 113 is configured to obtain other data necessary for a search and a display of a search result.

Display controller 114 is configured to control a display performed by display 141. Display controller 114 displays a text and/or an image based on data obtained by obtaining unit 113 in display 141. For example, display controller 114 displays panels, a list of search results generated based on the data list.

Description of a configuration of information search system 10 is provided below. In the configuration, a user of communication terminal 100 conducts a search for a content using communication terminal 100 at his/her convenience. In the present embodiment, the user conducts a search by selecting an object(s) displayed on the screen of display 141 without inputting a text string.

FIG. 4 shows an example of a search screen according to the present embodiment. In the search screen shown in FIG. 4, two or more panels P1 through P8 are displayed. Panels P1 through P8 are icons, each of which indicates a predetermined subject. For example, panel P1 corresponds to a subject "café." The user selects panel P1 to search for cafes. More specifically, the user touches a corresponding icon of panel P1 to select panel P1. The user can displace the selected panel to another point by dragging the panel.

It is possible to select two or more subjects at the same time by a user. Stated otherwise, the user can conduct either a search in which a search condition includes a single subject or a search in which a search condition includes two or more subjects. In a preferable embodiment, communication terminal 100 prompts the user to make a particular input, which is a long-pressing action or other inputs different from a normally used input for designating a single subject for designating two or more subjects

The number of panels or details of the subjects indicated by the panels shown in Fig. 4; is one example of the present invention. The displayed subjects may vary depending on a user. For example, the subjects are prepared taking into consideration factors such as gender, age, location, or the like of a user. Moreover, communication terminal 100 may customize the screen by changing the panels and/or an arrangement of the panels in response to an instruction input by the user.

A text displayed within a panel does not necessarily coincide with a keyword of the subject for the panel. For example, when panel P8 titled " coupon" is selected, a generated query may include a keyword "voucher" instead of "coupon." Alternatively, the query may include both keywords for an OR search. In another embodiment, an image is displayed on a panel instead of a text.

In the present embodiment, a range of a search for a content may be limited to a particular web site or may be open to the whole of the Internet space. Alternatively, only contents relating to an area near a current location of a mobile terminal may be a subject for a search using a GPS (GLOBAL POSITIONING SYSTEM) or other technologies for obtaining location information, which may be referred to as "a local search." Typically, the local search is used in searching for a restaurant, a recreation facility, a hotel, or the like.

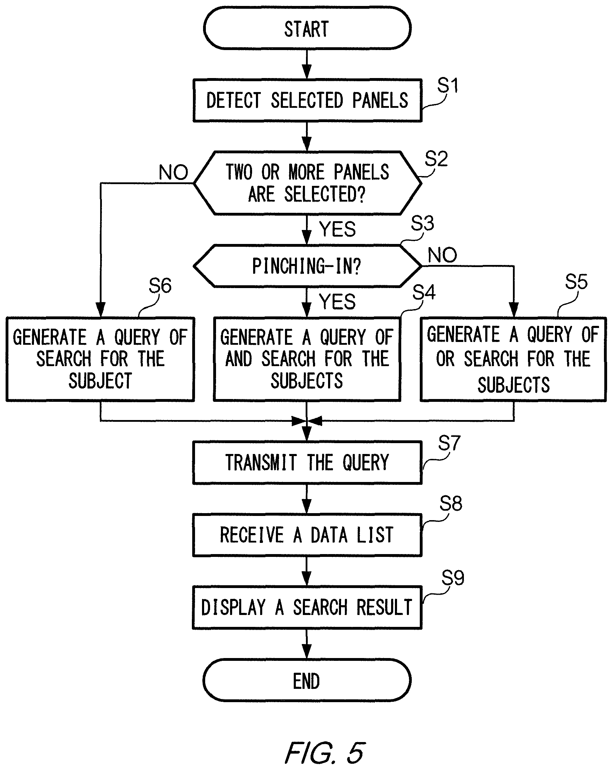

FIG. 5 is a flowchart showing a search according to the present embodiment. Upon receipt of an input of selecting one of the panels in step S1, main controller 110 of communication terminal 100 checks whether two or more panels are selected (step S2). In a case where two or more panels are not selected, main controller 110 generates a query based on a search condition corresponding to the one panel selected in step S1 (step S6). The generation of the query may be initiated when the user takes his/her finger off the screen, or when the user inputs a predetermined action (for example, pressing a search button).

In a case where two or more panels are selected, main controller 110 checks whether there is another input. Specifically, main controller 110 checks whether an arrangement of the two or more panels selected by the user is changed by a pinching-in or pinching-out action performed with regard to the two or more panels (step S3).

If the panels selected by the user are placed close to each other, stated otherwise, a distance between the panels selected by the user becomes small, main controller 110 generates a query for searching the subject corresponding to the panels selected by the user by an AND search (step S4). If the panels selected by the user do not come close, main controller 110 generates a query for searching the subject corresponding to the panels selected by the user by an OR search (step S5). An AND search refers to a logical search for outputting a search result obtained by a logical product of two or more subjects. An OR search refers to a logical search for outputting a search result obtained by a logical sum of two or more subjects.

In a case where the user does not change the arrangement of the panels, stated otherwise, if the distance between the panels selected by the user remains unchanged, a query for executing an OR search is generated. Alternatively, a query for executing an OR search may be generated in this case. In a preferred embodiment, the user is prompted to select either of an AND search and an OR search in this case.

Main controller 110 transmits the generated query to search server 200 by communication unit 130 (step S7). Upon receipt of the query, search server 200 generates a data list based on the received query and transmits the data list to communication terminal 100. Main controller 110 receives the data list by communication unit 130 in step S8 and displays a search result corresponding to the data list in display 141 (step S9).

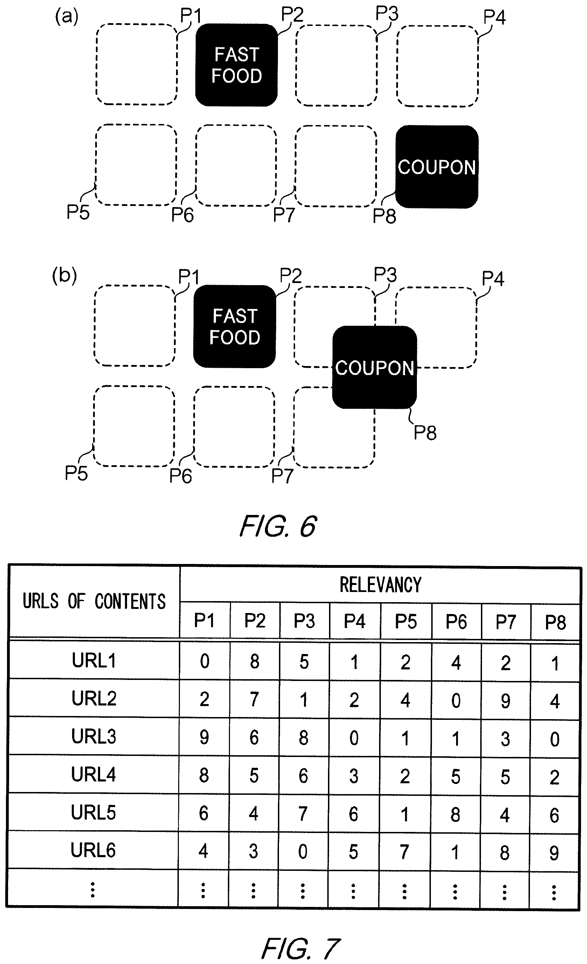

FIG. 6 shows an example of an input made by the user and a result of the input.

In this example, it is assumed that the user selects panel P2 titled "fast food" and panel P8 titled "coupon" in the search screen shown in FIG. 4. When the user selects the two panels, communication terminal 100 sets the attribute of the panels to be displaceable according to a pinching action. At this time, communication terminal 100 displays the selected panels differently from other panels to help the user recognize easily which panels are being selected as shown in FIG. 6A. For example, the selected panels are displayed in a different color or are caused to blink. Optionally, communication terminal 100 may conceal the unselected panels to help inputting by the pinching action with regard to the selected panels.

In a case where a search is instructed without changing an arrangement of the selected panels as shown in FIG. 6A, communication terminal 100 initiates an OR search. Accordingly, communication terminal 100 generates a query for searching contents that conform to at least one of the keywords "fast food" and "coupon." As a result, the user obtains a search result indicative of contents relating to a "fast food" and contents relating to "coupon."

In a case where the user changes the arrangement of the selected panels to reduce a distance between panels P2 and P8 as shown in FIG. 6B, communication terminal 100 initiates an AND search. As a result, communication terminal 100 generates a query for searching contents that conform to both of the keywords "fast food" and "coupon." As a result, the user obtains a search result indicative of contents relating to "fast food" and "coupon" (for example, a web page of a fast food shop that provides a coupon).

In view of the foregoing, according to the present embodiment, a search condition is changed by changing an arrangement of two or more displayed objects (panels), which correspond to "a first image" and "a second image", respectively), so as to conduct an AND search and an OR search selectively. As a result, it is possible to change a search condition easily without inputting a text string or an arrhythmic expression. Also, according to the present embodiment, it is possible to narrow down a search result by an intuitive action of bringing the objects corresponding to the subjects close to each other.

### Modifications

The embodiments described as doable are examples of embodiments of the preset invention.

It is possible to implement the present invention by other embodiments. Hereinafter, other examples of the present invention will be described. It is noted the modifications described below can be implemented alone or in combination.

(1) In the present invention, it is possible to employ other methods other than changing from OR search to AND search, to narrow down a search result. For example, a relevancy indicative of a degree of relevance between a content and a subject is assigned so as to display contents included in a search result based on the relevancy of the contents in response to an input made by the user.

Relevancies may be calculated in advance. Alternatively, search server 200 may calculate relevancies upon receipt of a query from communication terminal 100. A relevancy between a content and a subject may be determined based on the number of keywords corresponding to the subject, which are included in the content.

FIG. 7 shows an example of contents and relevancies assigned to the contents for a case where panels P1 through P8 shown in FIG. 4 are displayed on the screen. For the sake of convenience each subject is indicated by a reference number of a respective panel in the figure. Also, the relevancy is expressed in ten steps by a number 0 to 9, in which a larger number refers to a stronger relevancy. A table in which URLs of contents and scores of the subjects are associated with each other, which is shown in FIG. 7, may be stored in search server 200, so as to refer to the table when conducting a search for a content.

In this example, with regard to relevancies relating to "fast food" corresponding to panel P2, URL1 is the highest followed by "URL2," "URL3," "URL4," "URL5," and "URL6" in an order of their relevancy. With regard to relevancies relating to "coupon" corresponding to panel P8, "URL6" is the highest followed by "URL5," "URL2," "URL4," "URL1," and "URL0."

In a case where, only "fast food" corresponding to panel P2 is designated as a subject and a search for the subject is initiated, search server 200 extracts contents in an order of the relevancy with regard to the "fast food" corresponding to panel P2 such that contents of higher relevancy are extracted with higher priority. In a case of conducting a search where "fast food" corresponding to panel P2 and "coupon" corresponding to panel P8 are designated as subjects for an OR search or an AND search, search server 200 calculates a sum of the relevancies corresponding to the subjects and extracts contents in an order of the relevancies. In this example, "URL6" is displayed at the top of the list since "URL6" has the largest sum (12=3+9) of relevancies. Alternatively, search server 200 calculates a product of the relevancies to extract contents in an order of the calculated product. In this example, "URL2" displayed at the top of the list since "URL2" has the largest product (28=7^{∗}4) of relevancies.

Communication terminal 100 may be configured to change the number of displayed contents included in a search result in response to a pinching action input by a user. For example, when a distance between the panels is reduced by a pinching-in action as shown in FIG. 6B, communication terminal 100 may narrow down the search result to contents having higher relevancies. Alternatively, when a distance between the panels is increased by a pinching-out action, communication terminal 100 may increase the number of displayed contents included in the search result.

Narrowing down a search result is realized by changing a query generated by communication terminal 100 or by other algorithms. For example, in a case where two or more subjects are designated for a search, communication terminal 100 transmits a default query to obtain a search result regardless of a distance(s) between the two or more panels, and changes the number of displayed content items included in the obtained search result or other configurations of the screen depending on the distance(s). Stated otherwise, it is possible to select and dispose a part of contents included in the search result for display based on a distance of panels that can be changed by a user's input.
(2) It is possible for a user to designate more than three panels at the same time. In this case, designation may be input by a predetermined action(s) similar to the one described above. Specifically, the predetermined action could be the bringing together all of the selected panels to (or away from) the center of the screen. Alternatively, an input may be made for bringing the selected panels close to (or away from) at least one of the selected panels.
(3) A search of the present invention may be a weighted search. The weighted search refers to a search in which different weights, each of which can indicates a degree of importance), are assigned to different keywords when two or more keywords each corresponding to a subject are included in a query. For example, in a case of a distance between two panels, a weight may be determined based on either of the panels being displaced to modify a search result. For example, in a case where a position of panel P8 is changed and panel P2 stays unchanged, as shown in FIG. 6B, communication terminal 100 assigns a greater (smaller) weight to the subject "fast food" corresponding to panel P2 than a weight assigned to the subject "coupon" corresponding to panel P8. In a case where a position of panel P2 is changed and panel P8 stays unchanged, a query may be generated in which a greater (smaller) weight for the subject "coupon" is assigned.
(4) In the present invention, a user's action to change search conditions does not necessarily express a change of a distance between a first and second objects. For example, a user's action to change search conditions may include an expression of indicating that the distance between the first and second objects is maintained and the second object is rotated around the first object clockwise or counterclockwise. In this case, a rotation clockwise and counterclockwise may indicate an AND search and an OR search, respectively.
(5) Communication terminal 100 may change the appearances of the displayed panels based on an instruction input by a user. For example, communication terminal 100 changes a color of the panels in which a respective position(s) thereof has been changed or causes the panels to blink, so as to differentiate the appearance of the panel from that of the other panels. As a result, the user easily recognizes which panel(s) is displaced. In this case, communication terminal 100 may change colors of displaced panels (second objects) gradually corresponding to distances to panel P1 (first object). Stated otherwise, an amount of displacement is reflected in a gradation level.
(6) Communication terminal 100 may display an amount of contents in display 141 prior to a display of the data list (or search list) when a search condition is changed. The amount of contents may be equal to the number of all of the contents that satisfy a search condition designated by the user, an approximate number thereof, or a total size thereof. Also, communication terminal 100 may express the number or amount of contents that satisfies a search condition by an appearance of at least one of the first and second objects displayed. For example, communication terminal 100 may change a color of panels based on the number or amount of the contents satisfying the search condition.
(7) In the present invention it is possible to conduct a search at a node other than a server. A search according to the present invention can be applied to a search of a desktop computer to search for a file stored in a local storage of the computer. Simply put, an application of the present invention is not limited to a device configured to generate a query and output it to another device. An application of the present invention includes a device configured to conduct a search based on a query generated by the device.
(8) A content to be searched in the present invention is not limited to a web page. A content of the present invention may be a digital document other than a web page. The digital content may be a web page in which an audio, a moving image, a game or other digital contents (or a link to a digital content) is embedded. Alternatively, a content of the present invention may be a web page in which user's reviews or comments on a content are written. Thus, the present invention can be applied to a search for any digital content including contents exemplified above.
(9) An input device of the present invention is not limited to a touch screen. The input device of the present invention may be configured to project images such as panels indicative of subjects on a desk or a wall and detect a position of a finger(s) by infrared light, or the like. An input is not necessarily made by a finger(s). It is possible to input instructions by using a stylus (stylus pen or touch pen). Thus, "a pointer" used in the present invention includes a finger(s) and other pointing devices.
   An inputting action of the present invention is not limited to touching a surface of the touch screen by a pointer. For example, a touch screen having a capacitive panel is configured to detect a finger(s) positioned close to the surface of the panel in addition to a finger(s) touching the panel. An input device of the present invention may be configured to detect a user's input based on a closeness of a finger(s) to the surface of the panel.
(10) A user interface device of the present invention is applicable to general electronic devices other than a smart phone or a tablet computer. For example, the present invention may be applied to a user interface of a portable gaming console, a portable music player, an electronic book reader, an electronic dictionary, a personal computer, and the like.

In addition to a user interface device, there is provided an electronic device, an information search system having the electronic device and a server, a method of searching information, and a program implemented by the user interface device in the present invention. The program can be stored on an optical disk or other storing media, or can be downloaded via a network including the Internet to a computer such that a user can install the program in the computer.

## Claims

1. A user interface device (110) comprising:
a display controller configured to display a first object (P1,..., P8) corresponding to a first subject and a second object (P1,..., P8) corresponding to a second subject;
a detection unit (111) configured to detect an input instructing a change of an arrangement of the first and second objects (P1,..., P8);
wherein the display controller is configured to display a result of a search relating to the first and second subjects in response to an instruction detected by the detection unit (111), the result depending on the change of the arrangement; wherein
the display controller is configured to narrow down the result when a distance between the first and second objects (P1,..., P8) becomes small in response to an input; wherein
the display controller is configured to change the displayed results from a result of a search conducted based on a logical sum of the first and second subjects to a result of a search conducted based on a logical product of the first and second subjects when a distance between the first and second objects (P1,..., P8) becomes small in response to the input; and
wherein the display controller is configured to generate different search results depending on a case where the input instructs dislocation of the second object and stay of the first object and a case where the input instructs dislocation of the first object and stay of the second object.

2. The user interface device (110) according to Claim 1, wherein:
the result includes at least one content that relates to at least one of the first and second subjects;
a relevancy indicative of degrees of relevance with regard to the first and second subjects is assigned to the at least one content; and
the display controller is configured to narrow down the at least one content specified by the result to a content to which a higher relevancy is assigned when a distance between the first and second objects (P1,..., P8) becomes small in response to the input.

3. The user interface device (110) according to Claim 1, wherein the display controller is configured to generate the search result depending on a time-dependent relative position between the first and second objects (P1,..., P8), which changes with time.

4. The user interface device (110) according to Claim 3, wherein when the time-dependent relative position is caused by a rotational motion of the second object (P1,..., P8) with reference to a position of the first object (P1,..., P8), the display controller is configured to selectively apply a logical sum and a logical product with regard to the first and second subjects for the search depending on a direction of the rotational motion.

5. The user interface device (110) according to any one of Claims 1 to 4, wherein the display controller is configured to display an amount of at least one content included in the search result in response to the input, prior to a display of the at least one content.

6. The user interface device (110) according to any one of Claims 1 to 5, wherein the display controller is configured to change an appearance of at least one of the first and second objects (P1,..., P8) based on a change of the arrangement.

7. A method of searching information comprising:
displaying a first object (P1,..., P8) corresponding to a first subject and a second object (P1,..., P8) corresponding to a second subject;
detecting an input instructing a change of an arrangement of the first and second objects (P1,..., P8);
displaying a result of a search relating to the first and second subjects in response to a detected instruction, the result depending on the change of the arrangement;
narrowing down the result when a distance between the first and second objects (P1,..., P8) becomes small in response to an input;
changing displayed results from a result of a search conducted based on a logical sum of the first and second subjects to a result of a search conducted based on a logical product of the first and second subjects when a distance between the first and second objects (P1,..., P8) becomes small in response to the input; and
generating different search results depending on a case where the input instructs dislocation of the second object and stay of the first object and a case where the input instructs dislocation of the first object and stay of the second object.

8. A program that causes a computer to execute:
displaying a first object (P1,..., P8) corresponding to a first subject and a second object (P1,..., P8) corresponding to a second subject;
detecting an input instructing a change of an arrangement of the first and second objects (P1,..., P8);
displaying a result of a search relating to the first and second subjects in response to a detected instruction, the result depending on the change of the arrangement;
narrowing down the result when a distance between the first and second objects (P1,..., P8) becomes small in response to an input;
changing displayed results from a result of a search conducted based on a logical sum of the first and second subjects to a result of a search conducted based on a logical product of the first and second subjects when a distance between the first and second objects (P1,..., P8) becomes small in response to the input; and
generating different search results depending on a case where the input instructs dislocation of the second object and stay of the first object and a case where the input instructs dislocation of the first object and stay of the second object.

## Patentansprüche

1. Benutzerschnittstellenvorrichtung (110), umfassend:
eine Anzeigesteuerung, welche konfiguriert ist, ein erstes Objekt (P1, ..., P8), welches einem ersten Gegenstand entspricht, und ein zweites Objekt (P1, ..., P8), welches einem zweiten Gegenstand entspricht, anzuzeigen;
eine Erfassungseinheit (111), welche konfiguriert ist, eine Eingabe zu erfassen, welche eine Änderung einer Anordnung des ersten und zweiten Objekts (P1, ..., P8) anweist;
wobei die Anzeigesteuerung konfiguriert ist, ein Ergebnis einer Suche in Bezug auf den ersten und zweiten Gegenstand in Antwort auf eine Anweisung, welche von der Erfassungseinheit (111) erfasst wurde, anzuzeigen, wobei das Ergebnis von der Änderung der Anordnung abhängt, wobei
die Anzeigesteuerung konfiguriert ist, das Ergebnis einzugrenzen, wenn ein Abstand zwischen dem ersten und zweiten Objekt (P1, ..., P8) in Antwort auf eine Eingabe klein wird; wobei
die Anzeigesteuerung konfiguriert ist, die angezeigten Ergebnisse von einem Ergebnis einer Suche, welche auf Basis einer logischen Summe des ersten und zweiten Gegenstands durchgeführt wurde, auf ein Ergebnis einer Suche, welche auf Basis eines logischen Produkts des ersten und zweiten Gegenstands durchgeführt wurde, zu ändern, wenn ein Abstand zwischen dem ersten und zweiten Objekt (P1, ..., P8) in Antwort auf die Eingabe klein wird; und
wobei die Anzeigesteuerung konfiguriert ist, abhängig von einem Fall, in dem die Eingabe Verschiebung des zweiten Objekts und Verbleib des ersten Objekts anweist, und einem Fall, in dem die Eingabe Verschiebung des ersten Objekts und Verbleib des zweiten Objekts anweist, unterschiedliche Suchergebnisse zu erzeugen.

2. Benutzerschnittstellenvorrichtung (110) nach Anspruch 1, wobei:
das Ergebnis zumindest einen Inhalt einschließt, welcher sich auf zumindest eines von dem ersten und zweiten Gegenstand bezieht;
eine Relevanz, welche Relevanzgrade in Bezug auf den ersten und zweiten Gegenstand angibt, dem zumindest einem Inhalt zugewiesen wird; und
die Anzeigesteuerung konfiguriert ist, den zumindest einen Inhalt, welcher durch das Ergebnis festgelegt ist, auf einen Inhalt einzugrenzen, dem eine höhere Relevanz zugewiesen ist, wenn ein Abstand zwischen dem ersten und zweiten Objekt (P1, ..., P8) in Antwort auf die Eingabe klein wird.

3. Benutzerschnittstellenvorrichtung (110) nach Anspruch 1, wobei die Anzeigesteuerung konfiguriert ist, das Suchergebnis abhängig von einer zeitabhängigen relativen Position zwischen dem ersten und zweiten Objekt (P1, ..., P8) zu erzeugen, welche sich mit der Zeit ändert.

4. Benutzerschnittstellenvorrichtung (110) nach Anspruch 3, wobei, wenn die zeitabhängige relative Position durch eine Drehbewegung des zweiten Objekts (P1, ..., P8) in Bezug auf eine Position des ersten Objekts (P1, ..., P8) verursacht wird, die Anzeigesteuerung konfiguriert ist, eine logische Summe und ein logisches Produkt im Hinblick auf den ersten und zweiten Gegenstand abhängig von einer Richtung der Drehbewegung für die Suche selektiv anzuwenden.

5. Benutzerschnittstellenvorrichtung (110) nach einem der Ansprüche 1 bis 4, wobei die Anzeigesteuerung konfiguriert ist, in Antwort auf die Eingabe eine Menge von zumindest einem Inhalt, welcher in den Suchergebnissen eingeschlossen ist, vor der Anzeige des zumindest einen Inhalts anzuzeigen.

6. Benutzerschnittstellenvorrichtung (110) nach einem der Ansprüche 1 bis 5, wobei die Anzeigesteuerung konfiguriert ist, ein Erscheinungsbild zumindest eines von dem ersten und zweiten Objekt (P1, ..., P8) auf Basis einer Änderung der Anordnung zu ändern.

7. Verfahren zum Suchen von Informationen, umfassend:
Anzeigen eines ersten Objekts (P1, ..., P8), welches einem ersten Gegenstand entspricht, und eines zweiten Objekts (P1, P8), welches einem zweiten Gegenstand entspricht;
Erfassen einer Eingabe, welche eine Änderung einer Anordnung des ersten und zweiten Objekts (P1, ..., P8) anweist;
Anzeigen eines Ergebnisses einer Suche in Bezug auf den ersten und zweiten Gegenstand in Antwort auf eine erfasste Anweisung, wobei das Ergebnis von der Änderung der Anordnung abhängt;
Eingrenzen des Ergebnisses, wenn ein Abstand zwischen dem ersten und zweiten Objekt (P1, ..., P8) in Antwort auf eine Eingabe klein wird;
Ändern angezeigter Ergebnisse von einem Ergebnis einer Suche, welche auf Basis einer logischen Summe des ersten und zweiten Gegenstands durchgeführt wurde, auf ein Ergebnis einer Suche, welche auf Basis eines logischen Produkts des ersten und zweiten Gegenstands durchgeführt wurde, wenn ein Abstand zwischen dem ersten und zweiten Objekt (P1, ..., P8) in Antwort auf die Eingabe klein wird; und
Erzeugen von unterschiedlichen Suchergebnissen, abhängig von einem Fall, in dem die Eingabe Verschiebung des zweiten Objekts und Verbleib des ersten Objekts anweist, und einem Fall, in dem die Eingabe Verschiebung des ersten Objekts und Verbleib des zweiten Objekts anweist.

8. Programm, welches einen Computer veranlasst, Folgendes auszuführen:
Anzeigen eines ersten Objekts (P1, P8), welches einem ersten Gegenstand entspricht, und eines zweiten Objekts (P1, P8), welches einem zweiten Gegenstand entspricht;
Erfassen einer Eingabe, welche eine Änderung einer Anordnung des ersten und zweiten Objekts (P1, ..., P8) anweist;
Anzeigen eines Ergebnisses einer Suche in Bezug auf den ersten und zweiten Gegenstand in Antwort auf eine erfasste Anweisung, wobei das Ergebnis von der Änderung der Anordnung abhängt;
Eingrenzen des Ergebnisses, wenn ein Abstand zwischen dem ersten und zweiten Objekt (P1, ..., P8) in Antwort auf eine Eingabe klein wird;
Ändern der angezeigten Ergebnisse von einem Ergebnis einer Suche, welche auf Basis einer logischen Summe des ersten und zweiten Gegenstands durchgeführt wurde, auf ein Ergebnis einer Suche, welche auf Basis eines logischen Produkts des ersten und zweiten Gegenstands durchgeführt wurde, wenn ein Abstand zwischen dem ersten und zweiten Objekt (P1, ..., P8) in Antwort auf die Eingabe klein wird; und
Erzeugen von unterschiedlichen Suchergebnissen, abhängig von einem Fall, in dem die Eingabe Verschiebung des zweiten Objekts und Verbleib des ersten Objekts anweist, und einem Fall, in dem die Eingabe Verschiebung des ersten Objekts und Verbleib des zweiten Objekts anweist.

## Revendications

1. Dispositif d'interface utilisateur (110) comprenant :
une unité de commande d'affichage configurée pour afficher un premier objet (P1, ..., P8) correspondant à un premier sujet et un second objet (P1, ..., P8) correspondant à un second sujet ;
une unité de détection (111) configurée pour détecter une entrée modifiant la disposition des premier et second objets (P1, ..., P8) ;
dans laquelle l'unité de commande d'affichage est configurée pour afficher un résultat d'une recherche concernant les premier et second sujets en réponse à une instruction détectée par l'unité de détection (111), le résultat dépendant du changement de la disposition ; dans lequel
l'unité de commande d'affichage est configurée pour affiner le résultat lorsqu'une distance entre les premier et second objets (P1, ..., P8) devient petite en réponse à une entrée ; dans lequel
l'unité de commande d'affichage est configurée pour modifier les résultats affichés d'un résultat d'une recherche effectuée sur la base d'une somme logique des premier et second sujets en un résultat d'une recherche effectuée sur la base d'un produit logique des premier et second sujets lorsqu'une distance entre les premier et second objets (P1, ..., P8) devient petite en réponse à l'entrée ; et
dans lequel l'unité de commande d'affichage est configurée pour générer différents résultats de recherche en fonction d'un cas où l'entrée ordonne la dislocation du second objet et le maintien du premier objet et d'un cas où l'entrée ordonne la dislocation du premier objet et le maintien du second objet.

2. Dispositif d'interface utilisateur (110) selon la revendication 1, dans lequel :
le résultat inclut au moins un contenu qui concerne au moins l'un des premier et second sujets ;
une pertinence indiquant le degré de pertinence concernant les premier et second sujets est attribuée à au moins un contenu ; et
l'unité de commande d'affichage est configurée pour affiner au moins un contenu spécifié par le résultat à un contenu auquel une pertinence supérieure est assignée lorsqu'une distance entre les premier et second objets (P1, ..., P8) devient petite en réponse à l'entrée.

3. Dispositif d'interface utilisateur (110) selon la revendication 1, dans lequel l'unité de commande d'affichage est configurée pour générer le résultat de recherche en fonction d'une position relative en fonction du temps entre les premier et second objets (P1, ..., P8), qui change avec le temps.

4. Dispositif d'interface utilisateur (110) selon la revendication 3, dans lequel, lorsque la position relative en fonction du temps est causée par un mouvement de rotation du second objet (P1, ..., P8) par rapport à une position du premier objet (P1, ..., P8), l'unité de commande d'affichage est configurée pour appliquer de manière sélective une somme logique et un produit logique concernant les premier et second sujets de la recherche en fonction de la direction du mouvement de rotation.

5. Dispositif d'interface utilisateur (110) selon l'une quelconque des revendications 1 à 4, dans lequel l'unité de commande d'affichage est configurée pour afficher une quantité d'au moins un contenu inclus dans le résultat de recherche en réponse à l'entrée, avant un affichage d'au moins un contenu.

6. Dispositif d'interface utilisateur (110) selon l'une quelconque des revendications 1 à 5, dans lequel l'unité de commande d'affichage est configurée pour modifier l'apparence d'au moins l'une des premier et second objets (P1, ..., P8) sur la base d'un changement de la disposition.

7. Procédé de recherche d'informations comprenant :
l'affichage d'un premier objet (P1, ..., P8) correspondant à un premier sujet et un second objet (P1, ..., P8) correspondant à un second sujet ;
la détection d'une entrée ordonnant une modification de la disposition des premier et second objets (P1, ..., P8) ;
l'affichage d'un résultat d'une recherche concernant les premier et second sujets en réponse à une instruction détectée, le résultat dépendant du changement de la disposition ;
l'affinement du résultat lorsqu'une distance entre les premier et second objets (P1, ..., P8) devient petite en réponse à une entrée ; dans lequel
la modification des résultats affichés d'un résultat d'une recherche effectuée sur la base d'une somme logique des premier et second sujets en un résultat d'une recherche effectuée sur la base d'un produit logique des premier et second sujets lorsqu'une distance entre les premier et second objets (P1, ..., P8) devient petite en réponse à l'entrée ; et
la génération de différents résultats de recherche en fonction d'un cas où l'entrée ordonne la dislocation du second objet et le maintien du premier objet et d'un cas où l'entrée ordonne la dislocation du premier objet et le maintien du second objet.

8. Programme qui cause l'exécution par un ordinateur de :
l'affichage d'un premier objet (P1, ..., P8) correspondant à un premier sujet et un second objet (P1, ..., P8) correspondant à un second sujet ;
la détection d'une entrée modifiant la disposition des premier et second objets (P1, ..., P8) ;
l'affichage d'un résultat d'une recherche concernant les premier et second sujets en réponse à une instruction détectée, le résultat dépendant du changement de la disposition ;
l'affinement du résultat lorsqu'une distance entre les premier et second objets (P1, ..., P8) devient petite en réponse à une entrée ;
la modification des résultats affichés d'un résultat d'une recherche effectuée sur la base d'une somme logique des premier et second sujets en un résultat d'une recherche effectuée sur la base d'un produit logique des premier et second sujets lorsqu'une distance entre les premier et second objets (P1, ..., P8) devient petite en réponse à l'entrée ; et
la génération de différents résultats de recherche en fonction d'un cas où l'entrée ordonne la dislocation du second objet et le maintien du premier objet et d'un cas où l'entrée ordonne la dislocation du premier objet et le maintien du second objet.
